# EUROPÄISCHE PATENTSCHRIFT

(11) **EP 0 346 395 B1**
(45) Veröffentlichungstag und Bekanntmachung des Hinweises auf die Patenterteilung: **09.06.1993**
(21) Anmeldenummer: 88903172.0
(22) Anmeldetag: 11.04.1988
(51) Int. Cl.: C08J 7/04, C08L 65/04, B65D 39/18, C09D 165/00

(54) **Verfahren zum Abfüllen und Verschliessen von Behältern mit pharmazeutisch reinem Inhalt**
Process for filling and closing receptacles containing a pharmaceutically pure substance
Procédé pour remplir et fermer des récipients contenant une substance pharmaceutiquement pure

(30) Priorität: 13.04.1987 US 37959
(43) Veröffentlichungstag der Anmeldung: 20.12.1989
(73) Patentinhaber: Pharma-Gummi Wimmer West GmbH, 52249 Eschweiler (DE)
(72) Erfinder: ROMBERG, Val, G., Upper Darby, PA 19082 (US); KIANG, Patty, H., Collegeville, PA 19426 (US); CURRY, Wayne, T., Pottstown, PA 19464 (US)
(74) Vertreter: Schmitt, Hans, Dipl.-Ing.
(86) Internationale Anmeldenummer: DE8800224
(87) Internationale Veröffentlichungsnummer: WO8808012

(56) Entgegenhaltungen:
- EP-A- 0 205 312
- US-A- 3 288 728
- US-A- 3 379 803
- US-A- 4 225 647
- Journal of Polymer Science: Polymer Chemistry Edition, vol.22, 1984, John Wiley & Sons, Inc. (New York, US), P. Kramer et al.: "Polymerization of para-xilylene derivatives (parylene polymerization). I. Deposition kinetics for parylene N and parylene C", pages 475-491

## Beschreibung

Die Erfindung betrifft ein Verfahren zum Abfüllen und Verschließen von Behältern mit pharmazeutisch reinem Inhalt.

### Hintergrund der Erfindung:

Für Glas- oder Plastikfläschchen, die pharmazeutische Produkte zum Inhalt haben, besteht seit vielen Jahren als bewährtestes Verschlußsystem ein Stopfen aus elastomerem Material. Die Glas- und Gummikombination bei solchen Behältern dient für einen weiten Bereich von pharmazeutischen Wirkstoffen. Dabei wird sowohl ein sicherer Verschluß der Medizin als auch ein leichter Zugriff dazu durch den Gummistopfen ermöglicht. Insbesondere kann, wenn sich Flüssigkeit in dem Fläschchen befindet, der Gummistopfen leicht von einer Hohlnadel durchstoßen werden, um eine gewünschte Menge des pharmazeutischen Wirkstoffes zu entnehmen, ohne daß der Behälterinhalt anderweitig berührt wird. Auch wenn sich Pulver in dem Behälter befindet, kann der elastomere Verschluß mit einer Hohlnadel durchstochen werden, um das Pulver durch Hinzufügen von Flüssigkeit wie z.B. chemisch reines oder destilliertes Wasser zu aktivieren. Das so aktivierte Medikament verbleibt dabei von einem sicheren Behältnis geschützt umschlossen.

Wegen des Erfolges dieser Art von pharmazeutischen Behältern und da mehr und mehr Systeme diese Gummistopfen in Glasbehältern verwenden, steuerte die Stückzahl, mit der diese pharmazeutischen Behälter hergestellt werden konnten, wesentlich zum wirtschaftlichen Erfolg dieser auch anderweitig erwünschten Komponentenausbildung bei. Beispielsweise bezieht sich dies auf konventionelle pharmazeutische Füll-Vorrichtungen, die sowohl zum Füllen von Fläschchen als auch zum Einbringen des Gummistopfens in den Hals des Fläschchens verwendet werden, wobei der Gummistopfen in den Hals des Fläschchens oder in ein anderweitig geformtes Behältnis mechanisch eingebracht wird. Vor dem mechanischen Einbringen oder Einführen werden die Gummistopfen von einem Magazin zu einer Verschlußvorrichtung transportiert. Dies erfolgt üblicherweise mit Hilfe von Zentrifugalkraft-, Vibrationsförderern oder durch Schwerkraft. Es ist wesentlich, daß die Stopfenkomponenten (des Stopfen-Flaschen-Systems) nicht aneinander- oder an der Transportvorrichtung hängen. Auch ist wesentlich, daß die Stopfen glatt in Kappen oder in Verschlußformvorrichtungen hineinlaufen. Eine solche Vorrichtung, insbesondere die zum Transportieren und Übertragen der System-Komponenten, besteht normalerweise aus rostfreiem Stahl oder anderem Material, das für pharmazeutische Verwendungszwecke extrem gut saubergehalten werden kann. Die Fähigkeit der Stopfenkomponente, glatt auf einer entsprechenden Oberfläche einer solchen Vorrichtung entlangzugleiten, ist direkt vom Reibungskoeffizienten der Stopfenkomponente abhängig; dabei sind niedrige Beträge dieses Reibungskoeffizienten weit mehr wünschenswert. Es ist ebenfalls von Bedeutung, daß die Elastomer-Komponenten, also die einzelnen Stopfen, während des Transportes innerhalb der Transfer-Vorrichtung nicht aneinander kleben bleiben.

Bisher war der hohe Reibungskoeffizient der gebräuchlichen Gummistopfen und anderer Gummimaterialien, die zu einer Schließvorrichtung oder einer anderen pharmazeutischen Vorrichtung transportiert wurden, der Begrenzungsfaktor für die Arbeitsgeschwindigkeit einer solchen Maschine. Ob nun Schwerkraft- oder Zentrifugalkraft- oder Vibrationsförderer verwendet werden, es ist nötig, daß die Gummistopfen und andere elastomere Komponenten sich glatt auf der Oberfläche der Zuführvorrichtung bewegen können und zwar so schnell wie möglich. Typischerweise haben Gummiteile in der Art, wie sie für pharmazeutische Verschlüsse verwendet werden, Reibungskoeffizienten von wenigstens 1,2. Dies ist ein offensichtliches, erhebliches Hindernis für einen schnellen Transport solcher Gummiteile und deshalb auch ein Hindernis hinsichtlich der Effektivität und niedriger Produktionskosten im Bereich der Verarbeitung von Gummiverschlüssen von pharmazeutischen Behältern. Um die allgemeine Verarbeitbarkeit von Gummiverschlüssen zu verbessern, wurde auch bereits die Verwendung von Silikonöl als Beschichtung der Außenseite des Stopfens vorgeschlagen. Dadurch soll auch erreicht werden, daß die einzelnen Gummistopfen während der Bearbeitung im Autoklaven oder während anderer Verfahrenschritte nicht aneinanderhängen. Man erreicht tatsächlich eine Verbesserung der Gleitfähgikeit der Gummiverschlüsse durch Silikonöl, welches jedoch auch zusätzliche Probleme schafft. Die Verwendung von Silikonöl erhöht nämlich die Anzahl der Partikel, die bei entsprechenden Untersuchungen von verschiedenen Medikamentenlösungen aufgefunden wurden. Beispielsweise wertet die (US-) Nahrungsmittel- und Medikamenten-Behörde (Food and Drug Administration) Verfahrens-Abläufe durch Zählen der Anzahl von vorhandenen Partikeln ohne Berücksichtigung der Herkunft oder Natur dieser Partikel. Silikonöl ist in geringen Mengen normalerweise kein unerwünschter Verunreiniger in Arzneimitteln, aber die Verwendung von Silikonöl erhöht doch die Anzahl der Partikel und beeinträchtigt somit die allgemeine Akzeptanz seines Gebrauchs in Produktionsvorrichtungen. Da die Menge an Silikonöl minimal ist und nur so viel beträgt, daß die einzelnen Stopfen daran gehindert werden, aneinander zu kleben, ist das Silikonöl nicht in der Lage, den Reibungskoeffizienten der Gummistopfen zur Verwendung in Hochgeschwindigkeitsverschluß-Vorrichtungen zu verbessern und dort eine gleichmäßigere, schnellere Förderung, insbesondere in Verbindung mit Zentrifugalfördersystemen zu erbringen. Schließlich verhalten sich die Gummistopfen, die mit Silikonöl behandelt werden, in keiner Weise vorteilhafter bezüglich des Bestehens chemischer Tests betreffend die Verträglichkeit mit und betreffend die Kontamination von Materialien, die sich in den Fläschchen befinden.

Elastomere Materialien, die in der pharmazeutischen Industrie verwendet werden, sind sorgfältig ausgesucht und zusammengesetzt, um so inert wie möglich zu sein, wenn sie mit pharmazeutischen Produkten wie z.B. Arzneimitteln od.dgl. in Kontakt kommen. Mischungsansätze und Produkte werden kontinuierlich überprüft, um sicherzugehen, daß sie nicht kontaminiert sind. Von spezieller Bedeutung zusätzlich zu dem Auftreten der vorerwähnten Partikel, die durch das Silikonöl produziert werden, sind Partikel, die von dem elastomeren Verschluß selbst kommen. Hinzu kommt, daß bei der Herstellung von elastomeren Bestandteilen in vielen Fällen bestimmte Spuren-Metalle (trace metals) verwendet werden und es ist wesentlich, daß diese Materialien nicht in einem praktisch ins Gewicht fallenden Umfang durch die Arzneimittel oder andere pharmazeutische Flüssigkeiten, die in Kontakt mit dem elastomeren Produkt kommen, extrahiert bzw. herausgewaschen werden. Insbesondere bezieht sich dies auf Metalle wie Kalzium, Aluminium und Schwermetalle, z.B. Zink und Blei. Beschleunigte und ultra-stark wirksame Tests werden verwendet, um die Mengen dieser unerwünschten Materialien zu bestimmen, die möglicherweise aus dem elastomeren Material extrahiert werden können. Die Menge des herauslösbaren Metalls, die gewonnen wird, wenn das Produkt einem verschärften Test unterworfen wird, liegt über der Menge, die unter normalen Bedingungen extrahiert wird und bei dem das Arzneimittel frei von einer ähnlichen Kontamination wäre.

Bisher sind noch keine pharmazeutischen Produkte hergestellt worden unter Verwendung von Behältern mit pharmazeutischem, reinem Inhalt darin und mit einem elastomeren Verschlußteil, der diesen Behälter verschließt, wobei der elastomere Verschlußteil ein elastomeres Grundteil (Basisteil) und eine das elastomere Grundteil überdeckende Beschichtung aufweist, die den Reibungskoeffizienten wesentlich verbessert und merkbar denjenigen Betrag der extrahierbaren Metallionen reduziert, der möglicherweise aus den elastomeren Verschlußteil extrahierbar ist. Eine Vielzahl von Materialien wurden bisher als Beschichtungsmaterial für eine Vielfalt von Anwendungszwecken vorgeschlagen. Jedoch führte die Beschichtung der gesamten Oberfläche von elastomeren Verschlußteilen wie Z. B. Gummistopfen für Behälter mit pharmazeutischem , reinem Inhalt bisher nicht zu einer in der Praxis anerkannten Übernahme durch pharmazeutische Industrie, bei der vorerwähnte Ziele befriedigend gelöst werden konnten. Mit anderen Worten: Die vorerwähnten bisherigen Vorschläge wurden in der Praxis der pharmazeutischen Industrie nicht angenommen.

Ein Material, das sich im allgemeinen als Beschichtungsmaterial als besonders vorteilhaft gezeigt hat, sind die Polymere der verschiedenen Paraxylylene. Das Gorham-U.S.-Patent Nr. 3 288 728 zeigt eine grundsätzliche Methode zur Herstellung linearer Copolymere aus Paraxylylen bei Temperaturbedingungen zwischen 450° C und 700° C. Dieses Patent schlägt vor, daß kleine Teile mit diesen Polymeren geschützt oder eingekapselt werden können, um die isolierenden und schützenden Eigenschaften des Polyparaxylylens zu erhalten. Diese Veröffentlichung zeigt und schlägt ganz allgemein vor, daß es eine Vielzahl möglicher Anwendungen für das Polymer als Beschichtungsmaterial gibt.

Das Gorham-U.S.-Patent Nr. 3 342 754 beschreibt das allgemeine Verfahren zum Herstellen linearer Polymere des Paraxylylens und insbesondere das Herstellen von Beschichtungen unter Verwendung dieses Materials. Das Patent enthält eine Vielzahl von unterschiedlichen Ausführungsbeispielen und schlägt vor, daß diese Polymere für die Verwendung als Film, Faser, Oberflächenbeschichtung oder elektrische Isolatoren wünschenswert sind. Sowohl dieses Patent als auch das davor erwähnte Gorham-U.S.-Patent Nr. 3 288 728 offenbaren den allgemeinen Vorschlag, daß fast jedes Material mit den Paraxylylen-Polymeren beschichtet werden kann, obgleich kein spezifisches Beispiel betreffend die pharmazeutische Industrie aufgeführt ist.

In dem Tittman-et-al-U.S.Patent Nr. 3 379 803 ist ein Verfahren sowie eine Vorrichtung beschrieben, bei denen ein zu beschichtendes Substrat durch eine Abdichtungschicht aus Quecksilber bzw. geschmolzenem Woodschem Metall aus dem Vakuum der Ausscheidungskammer in die freie Atmosphäre gefuhrt wird. Um die Bildung einer Spontanlegierung zwischen dem Quecksilber und dem Substrat zu verhindern, wird das Substrat zunächst mit einem dünnen, jedoch durchgehend kontinuierlichen Film aus Poly-(p-xylylen) beschichtet. Aus dieser Vorveröffentlichung ist daher bekannt, wie ein Metall mittels eines dünnen Poly-(p-xylylen)-Filmes vor dem direkten Kontakt mit einem anderen flüssigen Metall und der damit verbundenen Legierungsbildung bewahrt werden kann, jedoch sagt die US-PS 3 379 803 beispielsweise nichts darüber aus, wie Gummimaterial gegen eine Extraktion der in ihm befindlichen Metallionen geschützt werden kann.

Das U.S.-Hauptpatent Nr. 4 225 647 beschreibt ein Verfahren zum Beschichten von metallenen Gegenständen, Kunstgegenständen und Schmuck aus Glas, Porzellan und Edelsteinen mit einer ersten Schicht aus Silanen oder Siloxanen und einer zweiten Schicht aus Poly-(p-xylylen), wobei die genannten Siliziumverbindungen der ersten Schicht als Haftvermittler dienen. Demgegenüber soll die zweite Schicht die beschichteten Gegenstände vor dem Angriff beispielsweise aggressiver Medien schützen und deren Lebensdauer erhöhen. Dabei werden Schichtdicken zwischen 50 Ångström und 5 µm genannt. Dieses Verfahren ist jedoch nicht zur Beschichtung weicher verformbarer Gummiteile vorgesehen, - vielmehr beschreibt diese Vorveröffentlichung nur die Beschichtung harter Gegenstände aller Art, die schon von Natur aus eine vergleichsweise glatte Oberfläche aufweisen.

In der EP-A1-0 205 312 ist bereits das Auflaminieren eines Fluorpolymerfilms auf elastomeren Verschlußteilen beschrieben, der zur Erzielung einer Haftung auf dem elastomeren Substrat zunächst mit einer Koronabehandlung oberflächlich geätzt wird, damit die gewünschte physikalische Verbindung entstehen kann. Durch den Tiefziehprozeß beim Auflaminieren des Fluorpolymerfilms auf die Verschlußteile können jedoch geometrisch komplizierte Teile nicht mit diesem vergleichsweise dicken Film beschichtet werden, zumal dieses vorbekannte Verfahren auch aufwendig und dementsprechend teuer ist.

Schließlich beschreibt das Gorham-et-al-U.S.-Patent Nr. 3 300 332 ein Beschichtungsverfahren, bei dem es um das Beschichten mit einer unlöslichen Beschichtung geht. Die Dicke dieser Beschichtung ist nicht im einzelnen beschrieben, jedoch wird dort erwähnt, daß die Dicke der polymeren Beschichtung nicht weiter kritisch sei, sondern von dem Endverwendungszweck des Produktes vorgegeben werde. Diese Veröffentlichung beschreibt eine Beschichtung von 1/10.000 Zoll als sehr dünn und nützlich, wenn ein Schutz gegen aggressive Medien gewünscht wird.

In einem Beispiel sind sechs Gummistopfen beschichtet, um sie vor einem Quellen durch Lösungsmittel wie z. B. Heptan zu schützen. Die Menge des Beschichtungszusatzes reicht von 0,22 bis 0,28 Gramm, was eine Dicke von wenigstens 1/1000 Zoll (ca 25 µm) ergibt. Dort gibt es natürlich keinen Hinweis, daß der Reibungskoeffizient oder der Schutz gegen verschiedenartige Extraktionen von Metallen verbessert werden könnte, um ein besseres Produkt für die Verwendung im pharmazeutischen Bereich zur Verfügung zu haben.

Es besteht daher die Aufgabe, ein Verfahren zum Abfüllen und Verschließen von Behältern mit pharmazeutisch reinem Inhalt zu schaffen, wobei die zu verwendenden Verschlußteile sich bei der Bereitstellung für oder beim Aufenthalt in einer Füll-/Verschließ-Vorrichtung für solche Behälter nicht aneinander hängen, einen verbesserten Reibungskoeffizienten haben und bei denen der Betrag der aus dem Verschlußteil potentiell extrahierbaren Metallionen vermindert sein soll. Unter einem "Verschlußteil" werden hier "Gummistopfen, Kolbenstopfen, Gummischeiben für vorgefüllte Spritzen, Einlegscheiben und andere elastomere Verschlußteile" verstanden, die Kontakt mit dem Inhalt eines Behälters bekommen, in dem ein reiner pharmazeutischer Stoff, insbesondere ein Arzneimittel enthalten ist.

Die erfindungsgemäße Lösung dieser Aufgabe besteht in den Merkmalen von Anspruch 1.

Man hat herausgefunden, daß man auf folgende Weise zu einer verbesserten pharmazeutischen Verpackung kommt: Diese Verpackung weist einen (gewöhnlich aus Glas bestehenden) Behälter mit einem pharmazeutischen, reinen Inhaltsstoff darin auf. Dabei ist der Behälter mit Hilfe eines elastomeren Verschlußteiles oder dgl. verschlossen. Das elastomere Verschlußteil hat ein Gummi-Basisteil, auf dem ein gleichmäßiger Polyparaxylylenüberzug vorgesehen ist. Dabei ist die Überzugsdicke dieses Polyparaxylylenüberzugs derart zwischen 0,5 und 2,0 µm gewählt, daß der Reibungskoeffizient der so beschichteten Verschlußteile kleiner als 1,0, vorzugsweise kleiner als 0,5 beträgt.

Die Beschichtung ist weiterhin geeignet, die Extraktion von Metallionen aus dem Elastomer im wesentlichen zu verhindern. Dabei ist es vorteilhaft, wenn die Überzugsdicke des Gummi-Basisteils derart gewählt wird, daß sich die Metallionen-Extraktion dieses Gummi-Basisteils in einem solchen Umfang vermindert, so daß beispielsweise wenigstens 50 mal weniger Kalzium-Ionen in einer Stunde bei Behandlung in einem Autoklaven in einmolarer Salzsäure im Vergleich zu einem unbeschichteten Verschlußteil ergeben. Bei den erfindungsgemäß zu verwendenden Verschlußteilen wird auch ein wesentliches Vermindern oder Eliminieren von extrahierbaren organischen Substanzen gewährleistet.

Es wurde herausgefunden, daß der enge Bereich von etwa 0,5 Mikrometer bis etwa 2 Mikrometer insbesondere zum Herstellen von Beschichtungen auf elastomeren Verschlußteilen geeignet ist. Die Beschichtung verbessert wesentlich die Ökonomie der Fabrikation von pharmazeutischen Produkten einschließlich des Verschließens der Verpackungen wegen der wesentlichen Verbesserung des Reibungskoeffizienten beim Verschlußteil od.dgl., wodurch die Produktion von endbearbeiteten Produkten in wesentlich höheren Stückzahlen erreicht wird. Gleichzeitig ist die Menge des benötigten Beschichtungsmittel wesentlich geringer als zu erwarten wäre zum Realisieren der Schutz-Eigenschaften, die für dieses Verfahren notwendig sind; dadurch wird auch der Kostenbeitrag des benötigten Polyparaxylylens wesentlich vermindert.

Nachfolgend wird ein bevorzugtes Ausführungsbeispiel beschrieben:
Die Teile im Sinne des erfindungsgemäßen Verfahrens können aus jedem üblichen, elastomeren Basismaterial hergestellt werden, die für pharmazeutische Teile verwendet werden, bei denen elastomere Komponenten benötigt werden. Solche Materialien sind in Gummistopfen, Kolbenstopfen und Scheiben für vorgefüllte Spritzen, Einlegscheiben und anderen elastomeren Verschlußteilen eingearbeitet, die in Kontakt mit dem Inhalt eines Behälters kommen, in dem ein reines pharmazeutisches Material, in der Regel ein Arzneimittel, enthalten ist.

Die Kombination eines elastomeren Verschlußteiles mit der Polyparaxylylen-Beschichtung sollte geeignet sein, den Reibungskoeffizienten auf weniger als 1,0 und vorzugsweise auf etwa 0,5 oder weniger zu vermindern, so daß "Hochgeschwindigkeitsverschluß- und Fülleinrichtungen" verwendet werden können, um dort eine gleichmäßige und schnelle Förderung des Materials zu erreichen. Dies gilt insbesondere, wenn eine Zentrifugal-Zuführvorrichtung bei dieser Verschluß- und Fülleinrichtung verwendet wird. Solche "Hochgeschwindigkeitsverschluß- und Fülleinrichtungen" werden in Fachkreisen auch "Hochgeschwindigkeits-Abfüll-Linien" genannt. In bekannter Weise erfolgt in diesen die Zufuhr der (Glas-)Behälter, das Abfüllen des Arzneimittels und das Verschließen mit einem elastomeren Verschlußteil od. dgl. .

Die Ausbildung des erfindungsgemäß zu verwendenden Verschlußteiles od.dgl. od.dgl. mit der entsprechenden Beschichtung erlaubt es, bei der Hochgeschindigkeitverschluß- und Fülleinrichtung und dem zugehörigen Abfüll- und Verschließverfahren ohne Silikonöl auszukommen, wodurch die Zahl der eingangs erwähnten Partikel vermindert wird, die in der Lösung gefunden werden können, welche letztendlich in Kontakt mit dem elastomeren Verschlußteil kommt.

Die elastomeren Komponenten der hier beschriebenen pharmazeutischen Verpackung kann aus einer Vielzahl von elastomeren Komponenten, die üblicherweise in der pharmazeutischen Industrie verwendet werden, hergestellt werden. Naturgummi war verständlicherweise das ursprüngliche Material der Wahl für viele Rezepturen von elastomeren Teilen für die pharmazeutische Industrie. Butylgummi und viele synthetische Elastomere wurden erfolgreich als Stopfen, Kolbenstopfen verwendet, jeweils abhängig von den Erfordernissen hinsichtlich der Stabilität während der Behandlung in einem Autoklaven oder beim Sterilisieren.

Ein besonderer Gummi, der sehr gut für die Verwendung bei den hier beschriebenen Verschlußteilen geeignet ist, ist Butylgummi.

Bei der vorliegenden Erfindung kommen alle üblichen, bereits vorhandenen Stopfen und anderen elastomeren Artikeln als Grundmaterialien in Frage, die in der pharmazeutischen Industrie verfügbar sind. Demgemäß kann jedes elastomere Grundmaterial, das verwendet wurde oder das verwendbar wäre, wenn der Reibungskoeffizient und der Schutz vor Metallextraktion geeignet war, für die Verwendung als erste Komponente (Basisteil) der vorliegend beschriebenen Verschlußteilen vorgesehen sein.

Gegenwärtig verfügbare Gummiprodukte sind sehr gut für ihre Verwendung in der pharmazeutischen Industrie geeignet, abgesehen von ihrer Verzögerung innerhalb von Hochgeschwindigkeitsmaschinen und der Möglichkeit der Extraktion von Metallionen. Demgemäß werden bei der vorliegenden Erfindung Stopfen, Verschlußteile od. dgl. mit in diesen Bereichen verbesserter Eigenschaften und gleichzeitig in allen anderen übrigen Bereichen beibehalter Funktion. Bei dem erfindungsgemäßen Verfahren werden insbesondere Hochgeschwindigkeits-Verschlußmaschinen, namentlich mit Zentrifugalzuförderung benutzt. Silikonöl und andere Verfahrenszusätze werden vermieden.

Polymere, die aus den verschiedenen Paraxylylenen hergestellt sind, können als Beschichtung verwendet werden, in der Art, wie sie in den verschiedenen, vorgenannten Patenten beschrieben ist. Im einzelnen beschreiben, als ein Beispiel von verschiedenen Paraxylylen-Polymeren und Paraxylylen-Copolymeren, die vorerwähnte Gorham-U.S.-Patentschrift Nr. 3 342 754 und 3 288 728 die Chemie (chemistry) des Polymers und Copolymers,die als Beschichtungen bei dem vorliegenden Verfahren verwendet werden können. Die Titman-et-al-Patente Nr. 3.379.803 und 3.472.795 beschreiben geeignete Verfahren zum Aufbringen dieser einzelnen Polymere und Copolymere auf verschiedene Materialien. Es wurde herausgefunden, daß diese Verfahren allgemein geeignet sind zum Verwenden von Polymeren und Copolymeren des Paraxylylens mit elastomerem Basismaterial, wie dies bei den im vorliegenden Verfahren zu verwendenden Verschlußteilen beabsichtigt ist. Die Bezeichnung "Polyparaxylylen" ist vorgesehen, um sowohl Polymere als auch Copolymere der verschiedenen Paraxylylene einzuschließen, die zum Stand der Technik beschrieben sind.

Wie bereits erwähnt, ergibt das Aufbringen einer Beschichtung auf ein elastomeres Basismaterial ein Produkt, welches einen sehr guten, das heißt niedrigen Reibungskoeffizienten hat. Bei dem vorliegenden Verfahren ist der Reibungskoeffizient wie folgt definiert: Der Reibungskoeffizient ist das Verhältnis von Reibkraft-Bewegungswiderstand der zu testenden Oberfläche zu der der auf die Oberfläche einwirkenden Normal-Kraft. In diesem Falle war die verwendete Oberfläche eine Stahlplatte aus rostfreiem Stahl. Die Gummistopfen wurden mit einem 256 Gramm-Gewicht verbunden, derart, daß sie jeweils auf der rostfreien Stahlplatte zu liegen kommen. Die Neigung der Ebene wurde dann vergrößert, bis die Gewichte zu gleiten begannen. An diesem Punkt wurde die Ebene fixiert und der Winkel notiert. Der Tangens von diesem Winkel ist der statische Reibungskoeffizient.

Es wurde herausgefunden, daß durch die Paraxylylen-Polymerbeschichtungen auf elastomeren Grundkörpern der Reibungskoeffizient von mehr als 1,5 auf weniger als 1,0 und häufig auch auf weniger als etwa 0,5 verbessert werden konnte.

Um die Eignung der beim vorliegenden Verfahren zu verwendenden Verschlußteilen zu demonstrieren, wurde das folgende Experiment vorgesehen. In jedem Falle wurden die üblichen Gummistopfen, wie sie auch in den verschiedenen Anwendungsfällen in der pharmazeutischen Industie gebraucht werden, verwendet. Ein spezielles Elastomer war ein Butylgummi, der im Handel allgemein bekannt ist unter der Bezeichnung 4416/5o grau S-127. Die Gummistopfen waren mit Polychloroparaxylylen in der vorbeschriebenen Art beschichtet, wobei die Dicke von weniger als 1,0 Mikrometer bis zu mehr als 2,0 Mikrometer ging. Die Ergebnisse geben in jedem Falle einen Durchschnittswert von einer Anzahl von Stopfen wieder. In der nachstehend angegebenen Tabelle I sind die Ergebnisse der verschiedenen Tests von gemessenen Reibungskoeffizienten wiedergegeben, wie dies vorbeschrieben wurde.

**TABELLE I**

| Reibungskoeffizientmessung | |
|---|---|
| Elastomeres Verschlußteil | Reibungskoeffizient (Tangens des Neigungswinkels) |
| Unbeschichtet | 1.7 |
| Silikonisiert | 1.o |
| 0,1 Mikron Polychloroparaxylylen | 1.o |
| 0,5 Mikron Polychloroparaxylylen | o.5 |
| 1,0 Mikron Polychloroparaxylylen | o.18 |
| 2,0 Mikron Polychloroparaxylylen | o.1o |

Eine andere Reihe von Experimenten (Messungen) wurden ausgeführt, um unbeschichtete Gummistopfen der vorbeschriebenen Art mit solchen, die mit einer Polyparaxylylen-Schicht beschichtet sind, in einer Dicke von 1,o Mikron (=1,0 Mikrometer zu vergleichen. Die ausgeführten Tests entsprachen dem Standard-US-Pharmazeutischen-Nationalen Testrichtlinien und die Ergebnisse sind in der nachfolgenden Tabelle II aufgeführt.

**TABELLE II**

| Standard USP-NF Test | | |
|---|---|---|
| Test | unbeschichtet | 1,0 Mikrometer Beschichtung aus Poly-Chloroparaxylylen |
| pH-Veränderung | - o.8 | - o.4 |
| Nephelos (Trübung) | 12 | 1 |
| Reduzierende Substanzen (MLS -I₂) | o.o | o.o |
| Gesamtrückstand (MGS) | 1.2 | o.4 |
| UV | keine Absorption | keine Absorption |

Wie bei einem Vergleich der Tabelle II enthaltenen Daten erkennbar, ist der elastomere Verschluß in Kombination mit der Polyparaxylylen-Beschichtung wesentlich besser gegenüber dem unbeschichteten Gummiprodukt. Alle Werte für das unbeschichtete Material werden vom pharmazeutischen Industriestandard akzeptiert, jedoch sprechen die verbesserten Ergebnisse für eine erhöhte Annehmbarkeit des erfindungsgemäß zu verwendenden Produktes.

Um die möglicherweise extrahierbaren Metalle zu messen, wurde eine Anzahl vom Typ "4416 grau Gummistopfen" in einem Autoklaven bei 120°C. in 1oo ml von 1-molarer Salzsäure für 1 Stunde behandelt. Die Säure wurde dann durch eine Atomabsorptionsanalyse (atomic absorption analysis) analysiert sowohl auf Zink- als auch auf Aluminium-Konzentration. Nachfolgend sind in der Tabelle III die Ergebnisse von unbeschichteten Gummistopfen und von Gummistopfen, die mit 2 Mikrometern Polychloroparaxylylen beschichtet waren, aufgeführt. Die Verbesserung reicht von einer 35- bis zu nahezu 1ooo-fachen Verbesserung.

**TABELLE III**

| Extrahierbares Metall | unbeschichtet | beschichtet (2 Mikrometer) |
|---|---|---|
| Aluminium (ppm) (parts per million) | 7,o | o,2 |
| Zink (ppm) | 94,o | o,1 |

Weitere Tests betreffen die Auswirkung der Beschichtungsdicke bezüglich der Extrahierbarkeit von Metallen aus verschiedenen Gummis "817 grau" wurden durchgeführt und die Ergebnisse sind nachstehend in Tabelle IV gezeigt. Bei dieser Testserie wurden die Stopfen für eine Stunde in einmolarer Salzsäure in einen Autoklaven behandelt und die Säuren wurden dann durch Automabsorptionsanalyse analysiert auf verschiedene Metalle.

**TABELLE IV**

| Auswirkungen der Dicke bezüglich extrahierbarem Metall bei Gummi vom Typ "817 grau-Gummi" | | | |
|---|---|---|---|
| Beschichtungsdicke (Mikrometer) | Calcium (ppm) | Aluminium (ppm) | Zink (ppm) |
| o.o | o.17 | 4.2 | 5o |
| o.1 | o.15 | 1.8 | 35 |
| o.5 | o.o3 | o.1 | 12 |
| 1.o | <o.oo2 | <o.o5 | o.2 |
| 2.o | <o.oo2 | <o.o5 | <o.o5 |

Obgleich die früher beschriebenen Beschichtungen gundsätzlich in Dicken von weniger als o,1 Mikrometer oder weniger möglich sind, demonstriert die überraschende Wirksamkeit des engen Dicken-Bereiches bei den erfindungsgemäß zu verwendenden Verschlußteilen dramatisch die Überlegenheit vom diesem beschichteten Elastomer in einer pharmazeutisch kritischen Umgebung, wobei eine 5o- bis 1ooo-fache Verbesserung erreicht wird.

Die Auswirkung der Polyparaxylylen-Beschichtung auf verschiedene Gummistopfen wurde ebenfalls hinsichtlich anderer Eigenschaften gemessen, die bei pharmazeutischen Produkten erforderlich sind. In einer Testserie wurde die Fragmentation gemessen, wobei eine 2o-gauge (Stichmaß) dicke wiederverwertbare Nadel verwendet wurde, die 1o-mal in jeden Stopfen eingestochen wurde. Eine neue Nadel wurde für jeweils 4o Stiche verwendet. Der Inhalt der Fläschchen wurde dann auf einem Schwarzfilter untersucht und es wurden keine Beschichtungsbruchstücke gefunden. Die beschichteten und unbeschichteten Stopfen wurden dann bei 121° C eine Stunde lang im Autoklaven in Dampf und Wasser behandelt. Die unbeschichteten Stopfen waren klebrig und hingen in allen Fällen aneinander. Die beschichteten Stopfen konnten frei fließen, waren nicht klebrig und es war keine Beschädigung der Beschichtung zu beobachten.

Die beschichteten und unbeschichteten Stopfen wurden einem Nadeldurchstichtest unterworfen, wobei doppelseitige 21-gauge-Nadeln verfügbar waren. Es wurde eine Durchstichgeschwindigkeit von 5 Inch/Minute (= 127 mm/Min.) verwendet. Die benötigte Kraft sowohl für die beschichteten als auch für die unbeschichteten Gummistopfen war im wesentlichen in beiden Fällen gleich.

Es wurden auch Tests durchgeführt, die zeigten, daß der Betrag von extrahierbaren organischen Teilchen sehr wesentlich reduziert, wenn nicht sogar eliminiert war.

Ein Test zur Bestimmung der Menge von Partikeln zeigt deutlich verbesserte Ergebnisse bei polyparaxylylenbeschichteten Stopfen im Vergleich zu den Stopfen, die mit Silikon behandelt wurden, um die Fließfähigkeit der Produkte innerhalb einer Zentrifugal-Zuführvorrichtung während des Schließvorganges zu verbessern. Beschichtete, unbeschichtete und mit Silikon behandelte Stopfen wurden in 15o ml. gefiltertem, de-ionisiertem Wasser plaziert. Diese wurden dann 30 Minuten geschüttelt und die Partikel wurden in einer 1o ml-Probe gezählt. Partikel, die größer oder gleich 5 Mikrometer waren, wurden gezählt und berechnet. Sowohl beschichtete als auch unbeschichtete Stopfen hatten weniger als 3oo Partikel pro Stopfen,wohingegen solche, die mit Silikon behandelt wurden, mehr als 10.000 Partikel pro Stopfen aufwiesen.

Schließlich wurden viele Beschichtungen auf Gummistopfen aufgebracht zur Bewertung der Verarbeitung von pharmazeutischen Verschlüssen. Insbesondere pharmazeutische Produkte, die einen Behälter mit pharmazeutischen reinen Inhalt haben, wurden mit einem elastischen Verschlußteil von der vorbeschriebenen Art verschlossen. Diese Verschlüsse wiesen einen elastomeren Verschlußteil mit einem elastomeren Grundteil (Basisteil) und einer durchgehenden, gleichmäßigen Polyparaxylylen-Beschichtung auf, mit einer Schichtdicke von etwa 0,5 Mikrometer bis etwa 2 Mikrometer. Die Stopfen wurden zunächst bei 135° C 12 Minuten lang im Autoklaven sterilisiert. Sie wurden dann in eine Stopfenschließmaschine gefüllt. Diese Stopfen waren in einigen Fällen unbrauchbar, da die Behandlung im Autoklaven bewirkte, daß die Stopfen aneinanderhingen, was zu einem Stillsetzen der Maschine führte. Anschließend wurden die Produkte, die gemäß der vorliegenden Erfindung behandelt wurden, in die Stopfenmaschine eingefüllt, nachdem sie, wie vorbeschrieben, im Autoklaven behandelt wurden. Die größtmögliche Geschwindigkeit der Stopfenschließmaschine war hervorragend und ein erfolgreicher Arbeitsablauf ohne die Verwendung von Silikonöl erreicht, wodurch die erheblichen wirtschaftlichen Vorteile demonstriert wurden, die durch Verwendung der vorerwähnten Verschlußteilen erreicht wurde.

Eine Vielzahl von verschiedenen pharmazeutischen Produkten kann in dem Behälter verwendet werden, der einen Verschluß durch das erfindungsgemäße Verfahren bekommen hat. Besonders bei pharmazeutischen Produkten, die Arzneimittel oder Tierärztliche Medikamente, destilliertes Wasser, Lösungsmittel enthaltende Medikamente, Sirup, Serum und dgl. enthalten, ergeben sich keine nachteiligen Auswirkungen, wenn die Behälter, in denen sich derartige Produkte befinden, gemäß dem erfindungsgem, Verfahren verschlossen sind.

Wie bereits erwähnt, werden nachstehend noch einige Einzelheiten und Vorteile der Erfindung erwähnt :
Elastomere Basisteile haben bekanntermaßen in aller Regel Stanzränder, Formnähte od. dgl. Unregelmäßigkeiten. Durch die erfindungsgemäß zu verwendende vollständige Polyparaxylylen-Beschichtung wird auch praktisch vollständig verhindert, daß in den Fördereinrichtungen der Abfüllmaschinen durch die dort auftretende Reibung Gummipartikel abgerieben werden können, die bei den bisher bekannten, nicht beschichteten Stopfen sich lösen konnten, z. B. an Stanzrändern, Formnähten od. dgl. . Bei den bisher bekannten, nicht beschichteten Stopfen konnten dann diese Gummipartikel bei späterem Verschließen des Medikamentenbehälters den Behälterinhalt verschmutzen. Dies wird beim erfindungsgemäßen elastomeren Verschlußteil od. dgl. praktisch verhindert.

Das erfindungsgemäß zu verwendende elastomere Verschlußteil od. dgl. hat gegenüber den bisher bekannten, kunststoffbeschichteten Stopfen od. dgl., die ebenfalls ein elastomeres Basisteil haben, noch folgende Vorteile :
Bei den bisher bekannten, aus zwei Werkstoffkomponenten bestehenden vergleichbaren Verschlußteilen ist bekanntermaßen der elastomere Kern (Basisteil) elastisch, dagegen die dieses Basisteil wenigstens teilweise einhüllende Kunststoffhaut starr. Die vergleichsweise Starrheit der Kunststoffhaut rührt daher, daß eine Folienbeschichtung des elastomeren Basisteils mit einer Folie von weniger als 50 Mikrometer bisher nicht möglich war; das hängt damit zusammen, daß dünnere Kunststoffolien beim Verformen einreißen.
Beim erfindungsgemäßen Verfahren kann man nun -ohne diese Nachteile in Kauf nehmen zu müssen- die jeweils vorteilhaften physikalischen Eigenschaften des Gummis (insbesondere Elastizität) und die vorteilhaften chemischen Eigenschaften der aufgezeigten Kunststoffe für die Beschichtung (chemische Resistenz) miteinander verbinden, ohne deren jeweilige Nachteile in Kauf nehmen zu müssen. An sich sind nämlich die bisher bekannten, chemisch ausreichend resistenten Kunststoffe für die Beschichtung bei den bisher bekannten Dicken dieser Beschichtung zu hart und unelastisch, um sich mit der notwendigen Sicherheit z. B. an nicht vermeidbare Umgebenheiten der Mündungsoberfläche von Glasflaschen anpassen zu können. Beispielsweise kann die Härte der bisher bekannten Kunststoff-Beschichtungen auch zu ins Gewicht fallenden Beschädigungen beim Durchstechen des Verschlußteiles od. dgl. mit einer Hohlnadel führen. Dagegen erreicht man bei dem hier beschriebenen Verschlußteil, daß auch die chemisch resistente Beschichtung noch mindestens in etwa das elastische Verhalten von dem elastomeren Basisteil dann annimmt, wenn ein ganz konkreter Schichtdickenbereich von der Größenordnung von 0,5 Mikrometer (0,5 microns) bis 2,0 Mikrometer (2,0 microns) eingehalten wird.

Bei der sehr geringen Dicke der Beschichtung des Verschlußteiles od. dgl. spielt die Einhaltung von Toleranzen eine erhebliche Rolle. In Versuchen wurde nun herausgefunden, daß die gewünschten Eigenschaften des Verschlußteiles od. dgl. in aller Regel erreicht werden, wenn das elastomere Basisteil eine vollständige, ununterbrochene BeSchichtung von etwa 0,8 Mikrometer bis 1,2 Mikrometer erhält. Selbstverständlich müssen bei der Herstellung des hier beschriebenen Verschlußteils od. dgl. gewisse Herstellungstoleranzen bezüglich der Beschichtung in Kauf genommen werden. In den Versuchen wurde dann festgestellt, daß sich sehr günstige Verhältnisse ergeben, wenn die Mindestdicke der vollständigen, ununterbrochenen Beschichtung etwa 0,5 Mikrometer bis etwa 0,8 Mikrometer beträgt. Dabei besteht eine zusätzliche, vorteilhafte Weiterbildung der Erfindung darin, daß die maximale Dicke der Beschichtung etwa 1,2 bis 2,0 Mikrometer beträgt. Dementsprechend ist die optimale Dicke der Beschichtung mit 0,8 bis 1,2 Mikrometer noch schärfer eingegrenzt und es liegen, auch im Hinblick auf die Fertigung, gleichzeitig Angaben für die Mindestdicke und die maximale Dicke der Beschichtung vor.

In Versuchen (vergleiche Tabelle I) wurde herausgefunden, daß sich das erfindungsgemäße Verfahren besonders vorteilhaft einsetzen läßt, wenn ein Verschlußteil mit Polyparaxylylen-Überzug gewählt wird.

Alle vorbeschriebenen bzw. in den Ansprüchen aufgeführten Teilmerkmale können je für sich und in beliebiger Kombination miteinander erfindungswesentlich sein.

## Patentansprüche

1. Verfahren zum Abfüllen und Verschließen von Behältern mit pharmazeutisch reinem Inhalt, wobei die Behälter abgefüllt und anschließend mit elastomeren Verschlußteilen verschlossen werden, welche aus einem Gummi-Basisteil und einem vollständigen Polyparaxylylenüberzug darauf bestehen, wobei die Überzugsdicke des Polyparaxylylenüberzugs derart zwischen 0,5 und 2,0 µm gewählt wird, daß der Reibungskoeffizient der so beschichteten Verschlußteile kleiner als 1.0 beträgt.

2. Verfahren nach Anspruch 1, dadurch gekennzeichnet, daß die Überzugsdicke des Polyparaxylylenüberzugs derart gewählt wird, daß der Reibungskoeffizient der so beschichteten Verschlußteile weniger als 0,5 beträgt.

3. Verfahren nach Anspruch 1 oder 2, dadurch gekennzeichnet, daß die Überzugsdicke des Polyparaxylylenüberzugs derart gewählt wird, daß sich die Metallionen-Extraktion dieses beschichteten Gummi-Basisteils in einem solchen Umfang vermindert, so daß sich wenigstens 50 mal weniger Kalzium-Ionen in einer Stunde bei Behandlung in einem Autoklaven in einmolarer Salzsäure im Vergleich zu einem unbeschichteten Gummmi-Basisteil ergeben.

4. Verfahren nach einem der Ansprüche 1 bis 3, dadurch gekennzeichnet, daß die Überzugsdicke des Gummi-Basisteils derart gewählt wird, daß sich die Metallionen-Extraktion dieses Gummi-Basisteils in einem solchen Umfang vermindert, so daß sich wenigstens 50 mal weniger Aluminium-Ionen in einer Stunde bei Behandlung in einem Autoklaven in einmolarer Salzsäure im Vergleich zu einem unbeschichteten Gummi-Basisteil ergeben.

5. Verschlußteil nach einem der Ansprüche 1 bis 4, dadurch gekennzeichnet, daß die Überzugsdicke des Gummi-Basisteils derart gewählt wird, daß sich die Metallionen-Extraktion dieses Gummi-Basisteils in einem solchen Umfang vermindert, daß sich wenigstens 50 mal weniger Zink-Ionen in einer Stunde bei Behandlung in einem Autoklaven in einmolarer Salzsäure im Vergleich zu einem unbeschichteten Gummi-Basisteil ergeben.

6. Verfahren nach einem der Ansprüche 1 bis 4, dadurch gekennzeichnet, daß für den Polyparaxylylenüberzug Poly(Chloro-p-Xylylen) gewählt wird.

## Claims

1. A process for filling and closing receptacles containing a pharmaceutically pure substance, the receptacles being filled and then closed with elastomeric closure pieces consisting of a rubber base part fully coated with poly-para-xylylene, the coating thickness of the poly-para-xylylene coating being selected between 0.5 and 2.0 µm in such a way that the coefficient of friction of the closure pieces thus coated is smaller than 1.0.

2. A process as claimed in claim 1, characterized in that the coating thickness of the poly-para-xylylene coating is selected in such a way that the coefficient of friction of the closure pieces thus coated is less than 0.5.

3. A process as claimed in claim 1 or claim 2, characterized in that the coating thickness of the poly-para-xylylene coating is selected in such a way that the extraction of metallic ions from said coated rubber base part is reduced to such an extent that at least 50 times less calcium ions ensue in one hour during treatment in an autoclave in one molar hydrochloric acid in comparison to an uncoated rubber base part.

4. A process as claimed in any one of claims 1 to 3, characterized in that the coating thickness of the rubber base part is selected in such a way that the extraction of metallic ions from said coated rubber base part is reduced to such an extent that at least 50 times less aluminium ions ensue in one hour during treatment in an autoclave in one molar hydrochloric acid in comparison to an uncoated rubber base part.

5. A closure piece as claimed in any one of claims 1 to 4, characterized in that the coating thickness of the rubber base part is selected in such a way that the extraction of metallic ions from said rubber base part is reduced to such an extent that at least 50 times less zinc ions ensue in one hour during treatment in an autoclave in one molar hydrochloric acid in comparison to an uncoated rubber base part.

6. A Process as claimed in any one or claims 1 to 4, characterized in that poly(chloro-xylylene) is selected for the poly-para-xylylene coating.

## Revendications

1. Procédé pour remplir et fermer des récipients contenant une substance pharmaceutiquement pure, les récipients étant emplis puis fermés à l'aide de pièces élastomères de fermeture qui consistent en une partie de caoutchouc de base et en un revêtement complet en polyparaxylylène, l'épaisseur du revêtement de polyparaxylylène étant choisie entre 0,5 et 2,0 micromètres de manière que le coefficient de frottement des pièces de fermeture ainsi revêtues soit inférieur à 1,0.

2. Procédé selon la revendication 1, caractérisé en ce que l'épaisseur du revêtement de polyparaxylylène est choisie de façon que le coefficient de frottement des pièces de fermeture ainsi revêtues soit inférieur à 0,5.

3. Procédé selon la revendication 1 ou 2, caractérisé en ce que l'épaisseur du revêtement de polyparaxylylène est choisie de façon que l'extraction des ions de métaux de cette pièce en caoutchouc de base, revêtue, soit diminuée dans une proportion telle qu'il y ait au moins cinquante fois moins d'ions calcium en une heure lors du traitement dans un autoclave dans de l'acide chlorhydrique 1 molaire, en comparaison de pièces de caoutchouc de base non revêtues.

4. Procédé selon l'une des revendications 1 à 3, caractérisé en ce que l'épaisseur du revêtement de la pièce de caoutchouc de base est choisie de façon que l'extraction des ions de métaux de cette pièce de caoutchouc de base soit diminuée dans une proportion telle qu'il y ait au moins cinquante fois moins d'ions aluminium, en une heure en cas de traitement dans un autoclave dans de l'acide chlorhydrique 1 molaire, en comparaison d'une pièce de caoutchouc de base non revêtue.

5. Pièce de fermeture selon l'une des revendications 1 à 4, caractérisée en ce que l'épaisseur de revêtement de la pièce de caoutchouc de base est choisie de façon que l'extraction des ions de métaux de cette pièce de caouchouc de base soit diminuée dans une proportion telle qu'il y ait au moins cinquante fois moins d'ions zinc en une heure, en cas de traitement dans un autoclave dans de l'acide chlorhydrique 1 molaire, en comparaison d'une pièce de caoutchouc de base non revêtue.

6. Procédé selon l'une des revendications 1 à 4, caractérisé en ce qu'on choisit, pour le revêtement en polyparaxylylène, du poly( chloro-p-xylylène) .
